Europäisches Patentamt

European Patent Office

Office européen des brevets

(19)

(11) Veröffentlichungsnummer: **0 338 598**
**A2**

(12) **EUROPÄISCHE PATENTANMELDUNG**

(21) Anmeldenummer: **89111048.8**

(22) Anmeldetag: **11.03.86**

(51) Int. Cl.4: **H04Q 1/14 , H01R 4/24 , H01R 43/01**

(30) Priorität: **16.03.85 DE 3509523**

(43) Veröffentlichungstag der Anmeldung:
**25.10.89 Patentblatt 89/43**

(60) Veröffentlichungsnummer der früheren
Anmeldung nach Art. 76 EPÜ: **0 200 883**

(84) Benannte Vertragsstaaten:
**AT BE DE FR GB NL**

(71) Anmelder: **Quante Fernmeldetechnik GmbH**
**Uellendahler Str. 353**
**D-5600 Wuppertal 1(DE)**

(72) Erfinder: **Hell, Erich**
**Dietrich-Bonhöfer-Strasse 79**
**D-5608 Radevormwald(DE)**
Erfinder: **Neumann, Peter**
**Kohlstrasse 101**
**D-5600 Wuppertal 1(DE)**
Erfinder: **Rott, Joachim**
**Prinz-Handjery-Strasse 49**
**D-1000 Berlin 37(DE)**

(74) Vertreter: **Ludewig, Karlheinrich, Dipl.-Ing.**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) **Kabelabschlusseinheit.**

(57) Kabelabschlußeinheit für Fernmelde-, Signal-, Steuerkabel od.dgl., mit einem wannenartigen Träger, an dem das Ende eines Kabels sowie die aus dem Kabel heraustretenden Kabeladern anbringbar sind, mit einer Vielzahl quer zur Längsrichtung des Trägers sich erstreckender, auf den Träger aufsetzbarer, parallel zueinander ausgerichteter Anschlußblöcke, die mehrere Reihen von Kontakten aufweisen, von denen zwei Reihen einen abisolierfreien Leiteranschluß aufweisen, hierbei sind die Kontakte der anderen Reihe für ankommende Adern und die Kontakte der anderen Reihe für abgehende Leitungen, insbesondere Rangierleitungen vorgesehen, unt mit wenigstens einer weiteren Kontaktreihe für die Kontaktierungsmöglichkeit von Überspannungsableitern, Trenn- und Prüfsteckern od.dgl., wobei die Kontaktreihe der ankommenden Kabeladern im Querschnitt durch den Anschlußblock gesehen tiefer angeordnet ist, als die Kontaktreihe der abgehenden Leitungen, wobei in den Anschlußblöcken zwischen den unterschiedlich hoch gestalteten Kontaktreihen die Kontaktreihe für die Überspannungsableiter vorgesehen ist,und die Überspannungsableiter sich in dem Raum oberhalb der niedrigen Reihe für die Anschlußkontakte im Anschlußblock erstrecken, wobei an den Seitenstirnflächen der Anschlußblöcke Ösen vorgesehen sind, die durch mehrere Zwischenstege in mehrere Aufnahmen unterteilt sind.

*FIG. 18*

## Kabelabschlußeinheit

Die Erfindung betrifft eine Kabelabschlußeinheit für Fernmelde-, Signal-, Steuerkabel od.dgl., mit einem wannenartigen Träger, an dem das Ende eines Kabels sowie die aus dem Kabel heraustretenden Kabeladern anbringbar sind, mit einer Vielzahl quer zur Längsrichtung des Trägers sich erstreckender, auf dem Träger aufsetzbarer, parallel zueinander ausgerichteter Anschlußblöcke, die mehrere Reihen von Kontakten aufweisen, von denen zwei Reihen einen abisolierfreien Leiteranschluß aufweisen, hierbei sind die Kontakte der einen Reihe für ankommende Adern und die Kontakte der anderen Reihe für abgehende Leitungen, insbesondere Rangierleitungen vorgesehen, und mit wenigstens einer weiteren Kontaktreihe für die Kontaktierungsmöglichkeit von Überspannungsableitern, Trenn- und Prüfsteckern od.dgl., wobei die Kontaktreihe der ankommenden Kabeladern im Querschnitt durch den Anschlußblock gesehen tiefer angeordnet ist, als die Kontaktreihe der abgehenden Leitungen, wobei in den Anschlußblöcken zwischen den unterschiedlich hoch gestalteten Kontaktreihen die Kontaktreihe für die Überspannungsableiter vorgesehen ist, und die Überspannungsableiter sich in dem Raum oberhalb der niedrigen Reihe für die Anschlußkontakte im Anschlußblock erstrecken. Derartige Kabelabschlußeinheiten haben sich bewährt. Hinsicht lich der Montage sowie der Anschlußsicherheit der Anschlüsse sollen sie weiter vereinfacht und verbessert werden.

Aufgabe der Erfindung ist es daher, eine Kabelabschlußeinheit der eingangs genannten Art so zu gestalten, daß die einzelnen Anschlüsse leicht und sicher durchzuführen und übersichtlich angeordnet sind. Darüber hinaus soll die Kabelabschlußeinheit wohlfeil herzustellen sowie vielseitig verwendbar sein.

Dies wird erfindungsgemäß dadurch erreicht, daß an den Seitenstirnflächen der Anschlußblöcke Ösen vorgesehen sind, die durch mehrere Zwischenstege in mehrere Aufnahmen unterteilt sind. Hierdurch ergibt sich der bedeutende montagetechnische Vorteil, da die immer paarig anzulegenden Rangierdrähte vorsortiert in der richtigen Reihenfolge in die Aufnahmen eingelegt werden können, um sie dann anschließend mit dem Beschaltwerkzeug fortlaufend anschalten zu können. Hierdurch wird nicht nur Montagezeit eingespart, sondern auch Beschaltfehler erheblich reduziert, da die Leitungen einem Platzschema zugeordnet bleiben, auch wenn sie zum Beispiel bei Umschaltarbeiten von den Kontakten zeitweise gelöst werden.

In den Zeichnungen ist der Erfindungsgegenstand in mehreren Ausführungsbeispielen dargestellt und zwar zeigen:

Fig. 1 in perspektivischer Darstellung einen Anschlußblock,

Fig. 2 einen Ausschnitt aus der Draufsicht auf den Anschlußblock in größerem Maßstab,

Fig. 3 eine Seitenansicht eines Einfachanschlusses des Anschlußblockes,

Fig. 4 eine weitere Ansicht eines Doppelanschlußkontaktes des Anschlußblockes,

Fig. 5 eine Draufsicht auf den Anschlußkontakt nach Fig. 4,

Fig. 6 eine perspektivische Ansicht eines DOPpelkontaktes,

Fig. 7 eine perspektivische Ansicht eines einfachen Kontaktes,

Fig. 8 einen Querschnitt durch den Anschluß block in größerem Maßstabe bei einem ersten Ausführungsbeispiel,

Fig. 9 einen Querschnitt im größeren Maßstabe durch den Anschlußblock bei einem zweiten Ausführungsbeispiel,

Fig. 10 einen wannenartigen Träger mit mehreren eingesetzten Anschlußblöcken,

Fig. 11 bis

Fig. 14 verschiedene Ausführungsbeispiele des Überspannungsableiters ohne und mit Lötpille im Querschnitt,

Fig. 15 einen Doppelkontakt mit zwei Kontaktzungen,

Fig. 16 einen Querschnitt durch ein weiteres Ausführungsbeispiel eines wannenförmigen Trägers,

Fig. 17 in perspektivischer Darstellung ein Beschaltungswerkzeug zum Anschließen der Kabeladern,

Fig. 18 ein weiteres Ausführungsbeispiel eines Anschlußblockes in Draufsicht,

Fig. 19 ein weiteres Ausführungsbeispiel eines Anschlußkontaktes in Vorderansicht,

Fig. 20 ein weiteres Ausführungsbeispiel des Schneidmessers in Vorderansicht,

Fig. 21 das Schneidmesser nach Fig. 20 in Sei tenansicht,

Fig. 22 ein weiteres Ausführungsbeispiel des Schneidmessers in Vorderansicht,

Fig. 23 das Schneidmesser nach Fig. 22 in Seitenansicht,

Fig. 24 eine Metallhülse für einen Meßstekker in Draufsicht,

Fig. 25 die Metallhülse nach Fig. 24 in Vorderansicht und

Fig. 26 die Metallahülse in Rückansicht.

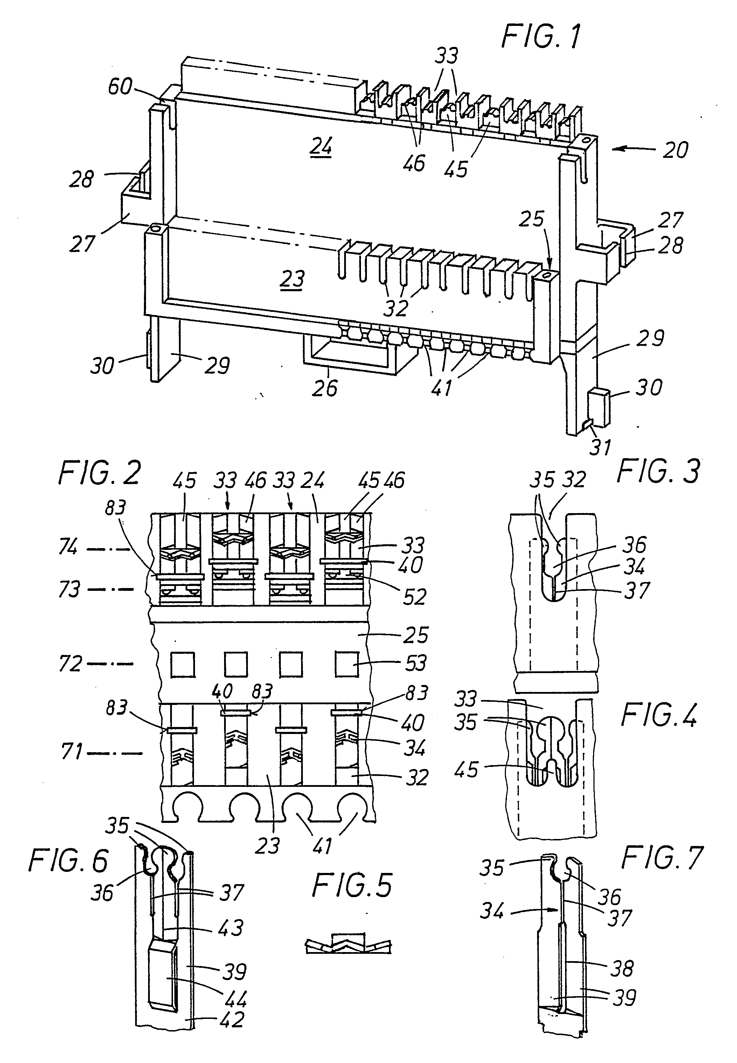

Die in Fig. 1 dargestellte Anschlußblock 20 weist ein zweiteiliges Gehäuse auf, mit einem Oberteil 21 und einem Unterteil 22.

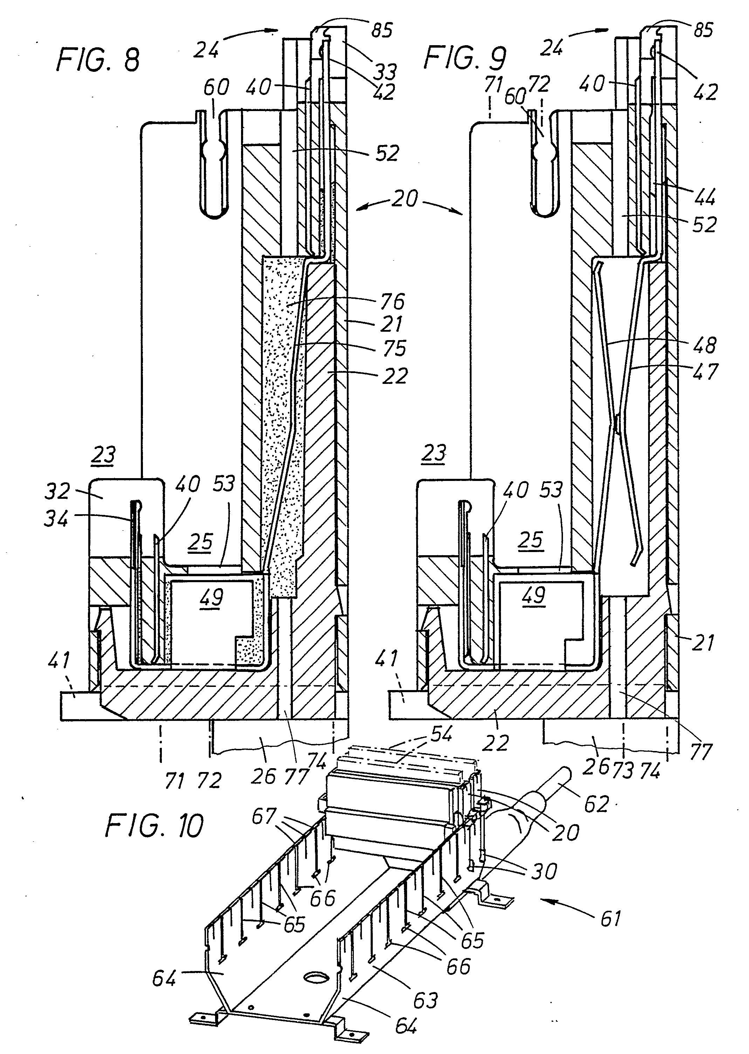

Wie aus Fig. 1 insbesondere aber aus Fig. 8 und 9 hervorgeht, weist der Anschlußblock Stufen 23 und 24 auf, die unterschiedlich hoch gestaltet sind. Hierbei trägt die niedrige Stufe an der Seite der höheren Stufe eine Vertiefung 25.

Unter dem Unterteil 22 des Anschlußblockes 20 ist eine Öse 26 vorgesehen. Diese Öse dient zur Aufnahme und Führung von Kabeladern.

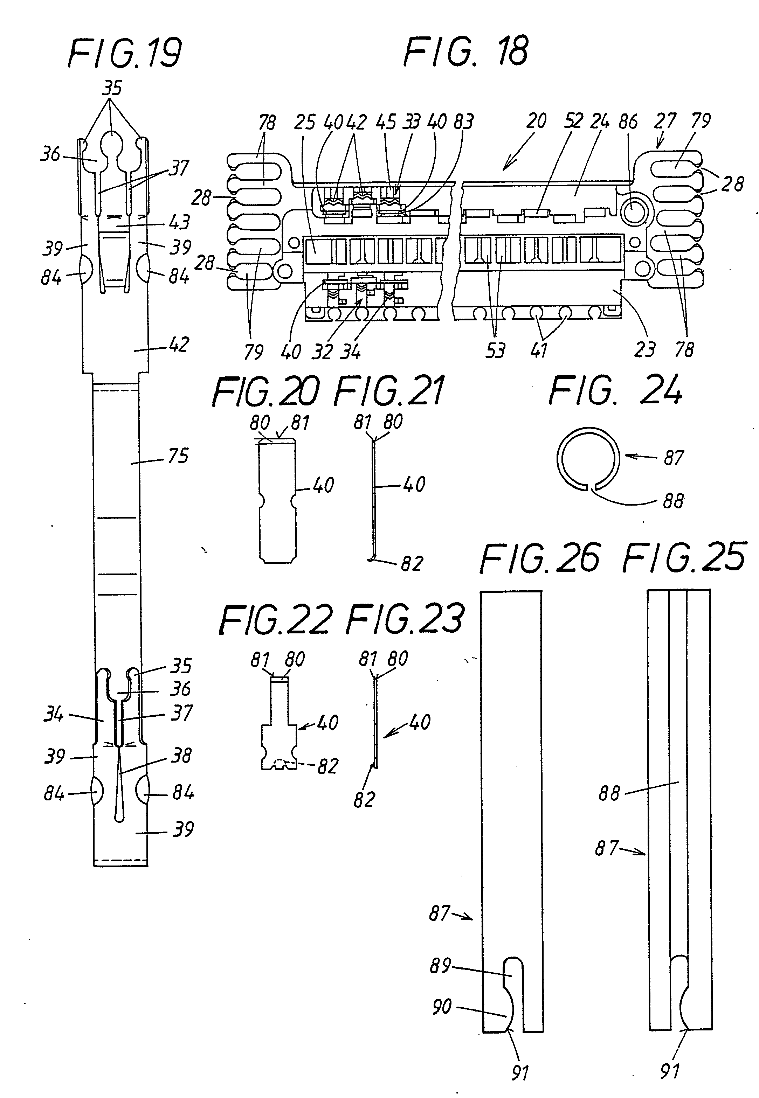

An den beiden Seitenstirnseiten des Anschlußblockes 20 sind ebenfalls Ösen 27 vorgesehen, die jedoch einen Schlitz 28 aufweisen zum Einführen von Rangierleitungen in die Ösen. Die Ösen 26 dienen zur Heranführung von Kabeladern an den Anschlußblock 20, während die Ösen 27 die abgehenden Rangierleitungen aufnehmen und Haltern. Bei dem Ausführungsbeispiel nach Fig. 18 sind die Ösen 27 durch Zwischenstege 78 unterteilt, so daß mehrere Aufnahmen 79 in der Öse 27 entstehen. In diese Aufnahmen können die an die Anschlußkontakte anzuschließenden Kabeladern vorsortiert werden und zwar in der richtigen Reihenfolge, um anschließend mit dem Beschaltwerkzeug fortlaufend anschalten zu können. Hierdurch wird erheblich an Montagezeit eingespart. Außerdem werden Beschaltfehler nahezu verhindert. Wie weiter aus Fig. 1 noch zu erkennen ist, ist an den Seitenstirnflächen im unteren Bereich des Anschlußblockes 20 eine Verlängerung 29 vorgesehen. Diese Verlängerung weist einen vom Anschlußblock weggerichteten Vorsprung 30 auf, wobei beidseitig am Fuße des Vorsprunges Rastnasen 31 vorgesehen sind. Vorsprung 30 und Rastnasen 31 dienen zur Führung und Halterung des Anschlußblockes an einem Träger 63 (vergl. Fig. 10).

In den oberen Enden der Stufen 23, 24 sind kanalartige Vertiefungen 32, 33 eingelassen. Diese kanalartigen Vertiefungen dienen zur Aufnahme von Kabeladern sowie zur Halterung von Anschlußkontakten.

Die kanalartigen Vertiefungen 32 der Stufe 23 weisen einen Anschlußkontakt 34 auf, der als Einfachkontakt ausgebildet ist. An diesen Kontakt kann eine Kabelader angeschlossen werden. Der Kontakt (vergl. Fig. 7) weist an seinem oberen Ende zwei zugewandte Nasen 35 auf, deren Abstand geringer ist, als der Außendurchmesser der anzuschließenden Kabeladern. Durch die Nasen 35 entsteht am oberen Ende des Anschlußkontaktes eine etwa kreisförmige Ausnehmung 36, die an ihren unteren Enden in einem Kontaktierungsschlitz 37 sich fortsetzt. Dieser Kontaktierungsschlitz ist in seiner Breite etwas geringer, als der Leiter der Kabelader. Beim Eindrücken der Kabelader in diesen Schlitz 37 wird die Aderisolierung durchtrennt und der Leiter leicht verformt, so daß ein guter elektrisch leitender Kontakt zwischen Anschlußkontakt 34 und dem Leiter der Kabelader eintritt.

An seinem unteren Ende, das nicht mehr zur Halterung der Kabelader verwendet wird, schließt sich an dem Kontaktierungsschlitz ein erweiterter Schlitz an. Dieser Schlitz dient der vereinfachten Fertigung des Anschlußkontaktes, da so die notwendigen Stanzwerkzeuge eine ausreichende Dicke aufweisen können.

Wie aus Fig. 7 zu erkennen ist, teilen die Schlitze 37, 38 den Anschlußkontakt in zwei Kontaktschenkel 39. Diese Kontaktschenkel sind derart winkelförmig abgewinkelt, daß der Anschlußkontakt 34 im Querschnitt gesehen dachförmig gestaltet ist, wobei der Kontaktierungsschlitz 37 sozusagen als Dachmitte ausgebildet ist. Der Anschlußkontakt 34 setzt sich, wie später noch aufgezeigt wird, im Anschlußblock 20 weiter fort.

Die kanalartige Vertiefung 32 weist hinter dem Anschlußkontakt 34 ein Schneidmesser 40 auf. Dieses Schneidemesser dient beim Anschließen zum Abschneiden von Aderüberlängen; hierbei greift das Schneidmesser mit Seitenkanten in Führungsnuten 83 des Anschlußblockes 20 ein. Dieses Schneidmesser weist am unteren Ende eine Abkröpfung 82 auf, mit der es auf einem Fußteil des Anschlußkontaktes sich abstützt.

Es sei hier noch erwähnt, daß unten am Unterteil 22 des Anschlußblockes unter jeder der kanalartigen Vertiefungen 32 eine Gehäuseausnehmung 41 vorgesehen ist. Diese Gehäuseausnehmung dient zur Aufnahme von Kabeladern, die durch die Öse 26 zum Anschlußblock herangeführt werden. Von der Gehäuseausnehmung führt dann die Kabelader zu der der Ausnehmung zugeordneten kanalartigen Vetiefung 32. Hier bei ist die Ausnehmung 41 bereichsweise so verengt, daß die Kabelader dort gehaltert werden kann.

Weiter sei hier noch erwähnt, daß die einzelnen Anschlußkontakte 34 der Stufe 23 versetzt zueinander angeordnet sind (vergl. Fig. 2). Diese Versetzung erfolgt um den notwendigen Sicherheitsabstand einhalten zu können.

Die kanalartige Vertiefung 33 in der Stufe 24 des Anschlußblockes 20 ist etwas breiter als die Vertiefung 32 gestaltet. Sie kann zwei nebeneinanderliegende Adern aufnehmen. In der Vertiefung 33 ist ein Anschlußkontakt 42 vorgesehen. Dieser Kontakt ist als sogenannter Doppelkontakt ausgebildet (vergl. Fig. 4,5 und 6). Der Kontakt 42 weist zwei Kontaktierungsschlitze 37 auf, deren oberes Ende ebenfalls in eine Ausnehmung 36 endet. Hierbei ist der Ausgang der Ausnehmung wiederum durch Nasen 35 im Durchmesser verkleinert worden, so daß die Ausnehmugen wiederum zur Halterung von den anzuschließenden Kabeladern verwendet werden können. Der Doppelkontakt weist in seiner Mitte eine Zunge 43 auf. Diese Zunge bildet an ihrem oberen Ende Teile der Ausnehmung 36 sowie der Nasen 35. Die Zunge ist im unteren Bereich mit einer Ausbuchtung 44 versehen. Diese Ausbuchtung dient als Führung beim Einsetzen in das Gehäuse des Anschlußblockes 2o. Wie aus Fig. 5 zu erkennen ist, sind die beiden äußeren Kontaktschenkel 39 wieder in einem Winkel zueinander abgebogen, während die Zunge 43 selber ebenfalls dachförmig gestaltet ist und zwar derart, daß die eine Hälfte der Zunge mit den ersten Kontaktschenkeln 39 im Querschnitt dachförmig ausgebildet ist und daß die zweite Hälfte der Zunge mit dem anderen Kontaktschenkel ebenfalls dachförmig gestaltet ist (vergl. Fig. 5). Die dachförmige Gestaltung im Bereich des Kontaktierungsschlitzes ist nun so angeordnet, daß bei angeschlossenem Rangierdraht bei einem Zug an diesem die Verbindung zwischen Leiter und Anschlußkontakt sich verstärkt, da durch die Zugbelastung versucht wird, die dachförmige Gestaltung in eine Ebene unzuwandeln.

Es sei hier noch erwähnt, daß dem Anschlußkontakt 42 in der kanalartigen Vertiefung 33 ebenfalls ein Schneidmesser 40 nachgeordnet ist, das auch in Führungsnuten 83 gehaltert ist. Auch dieses Schneidmesser ist mit einer Abkröpfung 82 versehen, mit der es gegen einen Vorsprung des Anschlußkontaktes 42 anliegt.

Es sei hier noch erwähnt, daß die kanalartigen Vertiefungen in ihrer Mitte einen Vorsprung 45 aufweisen, der derart ausgebildet ist, daß für jeden anzuschließenden Rangierdraht eine muldenartige Vertiefung 46 entsteht.

Wie aus Fig. 2 zu erkennen ist, sind die benachbarten Anschlußkontakte 42 wie die Anschlußkontakte 34 versetzt zueinander angeordnet und zwar entsprechend der Versetzung der Anschlußkontakte 34.

Die Anschlußkontakte 42 setzen sich ebenfalls im Inneren des Gehäuses fort.

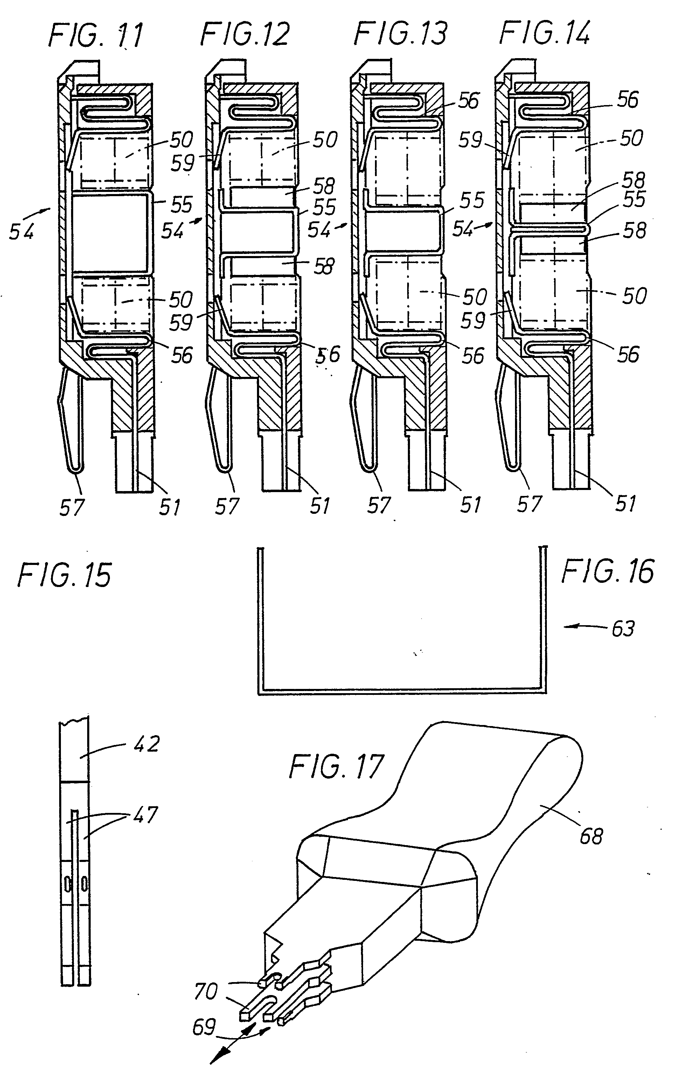

Bei dem Ausführungsbeispiel nach Fig. 9 ist im Inneren des Anschlußblockes der Anschlußkontakt 42 in zwei federnde Zungen 47 unterteilt (vergl. Fig. 15), die federnd an einem federnden Schenkel 48 des Anschlußkontaktes 34 anliegen. Hierbei ist im unteren Bereich des Schenkels 48 des Anschlußkontaktes 34 noch eine Abbiegung 49 vorgesehen, die zur Kontaktierung mit einem Kontakt 51 eines Überspannungsableiters 5o dient. Die federnden Zungen 47 und der federnde Schenkel 48 sind so in dem Gehäuse 21,22 angeordnet, daß sie unter einem Durchbruch 52 liegen. In diesem Durchbruch können Trenn- und Prüfstecker sowie Stromsicherungen eingebaut werden. Mit einem Trennstecker kann die Verbindung zwischen den beiden federnden Kontakten aufgehoben werden, mit einem Prüfstecker kann die Leitung überwacht werden, während die Stromsicherung selber schädliche Überströme begrenzt.

Für letztere Aufgabe der Überstrombegrenzung ist es erforderlich, den Kontakt mit den federnden Schenkel 47, 48 als Schließer-Kontakt anzuordnen. Hierzu wird der dargestellte Öffnerkontakt durch eine Öffnung 77 im Unterteil 22 des Anschlußblockes 20 unter Verwendung eines nichtdar estellten einschiebbaren Kunststoffteiles getrennt.

Wie schon erwähnt, weist der Anschlußkontakt 34 eine Abbiegung 49 auf. Diese Abbiegung ist an einem Fußteil des Anschlußkontaktes 34 angeformt. Sie berührt den einen Kontakt 51 eines Überspannungsableiters, dessen anderes Ende geerdet ist. Hierbei greift der Kontakt 51 durch eine Öffnung 53 in das Gehäuseinnere des Anschlußblockes und kontaktiert die Abbiegung. Die Überspannungsableiter 50 sind in einem Magazin 54 zusammengefaßt, das in Fig. 11 bis 14 dargestellt ist. Dieses Magazin 54 liegt in der Vertiefung 25 des Anschlußblockes und übergreift bereichsweise die Stufe 23.

Mittig weist das Magazin eine U-förmige Erdungsschiene 55 auf. Diese Erdungsschiene steht in elektrisch leitfähiger Verbindung mit einem federnden Erdungskontakt 57. Hierbei ist an beiden Seiten des Magazins ein Erdungskontakt 57 vorgesehen. Bei den Ausführungsbeispielen nach Fig. 11 bis 14 ist oberhalb und unterhalb der Erdungsschiene 55 ein Überspannungsableier 50 vorgesehen, der durch eine Anschlußfeder 56 federnd gegen die Erdungsschiene 55 gepreßt wird. Die eine Anschlußfeder 56 , die am oberen Ende des Magazins 54 angeordnet ist, führt mit einem Anschluß an der Erdungsschiene 55 vorbei zu einem anderen Kontakt 51. Diese Verbindung ist jedoch in den Figuren nicht dargestellt.

Bei einer etwas größeren Gestaltung der Überspannungsableiter 50, wie in Fig. 13 dargestellt, wird die U-förmige Erdungsschiene 55 derart verformt, daß ihre beiden Schenkel dichter zusammenstehen; wiederum ist gewährleistet, daß die Anschlußfeder 56 den Ableiter 50 sicher gegen die Erdungsschiene drückt.

Bei dem Ausführungsbeispiel nach Fig. 12 liegt zwischen Überspannungsableiter und Erdungsschiene eine Schmelzpille 58. Diese Schmelzpille schmilzt durch Erwärmung des Ableiters bei einer Überspannung, die beispielsweise durch einen Blitz hervorgerufen wird, ab. Hierdurch kann die Anschlußfeder 56 den Überspannungsableiter 50 in Richtung auf die Erdungsschiene drücken und zwar so weit, bis schließlich das Ende 59 der Anschlußfeder einen Teil der Erdungsschiene 55 berührt. Die Spannung wird dann unmittelbar über die Anschlußfeder und Erdungsschiene abgeleitet. Zur Unterbringung der Schmelzpille 58 ist der Abstand der beiden Schenkel der U-förmigen Erdungsschiene weiter verkürzt. Ein ähnliches Ausführungsbeispiel ist in Fig. 14 gezeigt. Dort ist die Schmelzpille mit dem Überspannungsableiter so groß, daß die beiden Schenkel der U-förmigen Erdungsschiene zusammengedrückt sind. Beim Schmelzen der Schmelzpille kann wiederum das Ende 59 der Feder 56 gegen die Erdungsschiene 55 gedrückt werden.

Es sei hier noch erwähnt, daß an den beiden äußeren Seitenstirnflächen des Magazins der Überspannungsableiter Rasten vorgesehen sind (nicht dargestellt), die in Schlitze 60 der Anschlußblöcke 20 eingreifen. Hierdurch erfolgt eine Halterung der Magazine am Anschlußblock.

In Fig. 10 ist nur ein Teil einer Kabelabschlußeinheit 61 dargestellt. Das anzuschließende Kabel 62 liegt am einen Ende eines wannenförmigen Trägers 63. Die einzelnen Adern des Kabels 62 werden dann durch eine Öffnung in das Innere des Trägers eingeführt. Der U-förmige Träger 63 weist an seinen Seitenwandungen 64 Schlitze 65 auf, die in einem Querschlitz 66 enden. Hierbei haben die Schlitze 65 und 66 gemeinsam ein etwa T-förmige Aussehen. In den Schlitzen 65 wird nun zur Halterung der Anschlußblöcke 20 der Vorsprung 30 eingeführt und zwar so weit, bis die Rastnasen 31 in den Querschlitz 66 einrasten können. Es sei hier erwähnt, daß die Wandungen des Trägers federnd ausgebildet sind und aus einem elektrischen Strom leitenden Metall bestehen.

Neben den Schlitzen 65 sind jeweils weitere Schlitze 67 vorgesehen. In diese Schlitze 67 greift ein federnder Erdungskontakt 57, der haarnadelförmig gestaltet ist, ein und zwar derart, daß er an beiden Seiten den Schlitz federnd berührt.

Sobald nun der erste Anschlußblock eingesetzt ist, wird eine bestimmte Anzahl von Adern an die Anschlußreihe der unteren Stufe angeschlossen, sobald der erste Anschlußblock bestückt ist, wird dann der zweite Anschlußblock eingesetzt und ebenfalls mit den entsprechenden Kabeladern versehen. Sobald nun die gewünschte Anzahl von Anschlußblöcken 20 eingesetzt ist, können die Anschlußkontakte 42 mit den abgehenden Adern, den sogenannten Rangierleitungen, versehen werden. Vorher kann bereits das Überspannungsableitermagazin eingesetzt werden, ohne daß der Anschluß der einzelnen Rangierleitungen an den Anschlußkontakten 42 behindert wird.

Der in Fig. 10 dargestellte U-förmige Wannenträger kann auch eine solche Gestalt haben, wie es in Fig. 16 dargestellt ist. Wiederum sind an den Seitenwänden dann die erforderlichen Schlitze zur Kontaktierung der Erdung sowie zur Halterung des Anschlußblockes vorgesehen.

Um nun die Anschlüsse leicht bewerkstelligen zu können, ist ein Beschaltungswerkzeug 68 vorgesehen, vergl. Fig. 17. Dieses Beschaltungswerkzeug weist drei plattenartige Abschnitte 70 auf, wobei die Abschnitte mittig eine tunnelartige Ausnehmung 69 aufweisen. Der mittlere Abschnitt 70 überragt die beiden seitlichen Abschnitte. Er ist gegen die Kraft eine Feder (vergl. Pfeil) soweit zurückschiebbar, daß er auf gleicher Höhe wie die anderen Abschnitte liegt. Beim Herstellen eines Aderanschlusses wird das Beschaltungswerkzeug 68 mit seinem hervorstehenden mittleren Abschnitt auf die Einführungsanschrägungen 85 gesetzt. Es gleitet dann weiter zu den Anschlußkontakten 34, 42. Hierbei greift der Vorsprung 45 der Vertiefung 33 in die Ausnehmung 69. Die Stirnseiten eines außenliegenden und des mittleren plattenartigen Abschnittes 70 drücken die anzuschließende Ader in den Kontaktschlitz 37, wobei vor Erreichen der Endposition der Ader im Schlitz 37 der mittlere und der zweite außenliegende plattenartige Abschnitt die Aderüberlänge über das Schneidmesser 40 drückt und diese Überlänge abschneidet.

Es sei hier noch nachgetragen, daß je nachdem, wie das Beschaltungswerkzeug 68 eingesetzt wird, einer der beiden äußeren Abschnitte 70 die Kabeladern in den Kontaktierungsschlitz 37 eindrückt.

Zum Abschluß sei noch darauf hingewiesen, daß die Anschlußkontakte 34 in Draufsicht auf den Anschlußkontakt gesehen in einer Reihe 71 angeordnet sind, wobei die einzelnen Kontakte, wie schon erwähnt, jeweils versetzt in der Reihe liegen. Parallel zu der Reihe 71 liegen in einer Reihe 72 die Abbiegungen für die Kontaktierung mit den Überspannungsableitern. Parallel zu dieser Reihe liegt dann eine Kontaktreihe 73, die die Kontakte 47, 48 für die Trenn- und Prüfstecker sowie Stomsicherungen umfaßt. Diese Kontakte sind wiederum versetzt angeordnet. Schließlich liegt weiter parallel dazu die Reihe 74 der Anschlußkontakte 42 für die Rangierleitungen. Diese sind, wie schon erwähnt, ebenfalls versetzt angeordnet. Die Versetzung ist insgesamt so, daß die Gestalt der beiden Anschlußkontakte 34 und 42 nicht verändert werden muß. In dem einen Fall liegen die Kontakte etwas näher zu der Vorderseite des Anschlußblockes und im anderen Falle etwas näher an der Rückseite des Anschlußblockes.

Weiter sei noch erwähnt, daß, falls auf die Kontakte für die Trenn- und Prüfstecker verzichtet wird, der gesamte Hohlraum, in dem sich die Anschlußkontakte 34 und 42 befinden, durch eine Füllmasse 76 ausgegossen werden kann, um so Kriechströme od. dgl. zu vermeiden (vergl. Fig. 8). Die beiden Anschlußkontakte sind dann über einen gemeinsamen Schenkel 75 miteinander verbunden.

Es sei hier noch darauf hingewiesen, daß in Fig. 1 die einzelnen Anschlußkontakte in den Vertiefungen nicht dargestellt wurden. In Fig. 18 wurden die kanalartigen Vertiefungen mit den Anschlußkontakten nur bereichsweise dargestellt.

Zu Fig. 18 ist noch zu bemerken, daß, im Gegensatz zu Fig. 2, die in den kanalartigen Vertiefungen 32, 33 liegenden Anschlußkontakte 34, 42 derartig angeordnet sind, daß die durch die Verbiegung der Kontaktschenkel 39 bzw. 43 gebildete Dachspitze von dem Schneidemesser 40 weg weist und zu den ankommenden Adern bzw. den Rangierleitungen hinweist. Es hat sich nämlich gezeigt, daß bei den anzuschließenden aus Kupferwerkstoff hergestellten Leitern ein besserer und sicherer Kontakt als bei einer anderen Anordnung gegeben ist.

Weiter sei darauf hingewiesen, daß der Anschlußblock 20 im Bereich der Ösen 27 eine Bohrung 86 trägt. Diese Bohrung weist eine nicht dargestellte Rippe auf. In die Bohrung wird eine mit einem Längsschlitz 88 versehene Metallhülse 87 eingesetzt, die durch die in den Schlitz eingreifende Rippe in der Bohrung eine genau definierte Lage einnimmt. Die Metallhülse weist an ihrem unteren Ende einen weiteren Schlitz 89 auf, der wie der Schlitz 88 einen den Schlitz verkleinernden Vorsprung 90 trägt, wobei die beiden Schlitze an ihrem unteren Ende dann in eine Verbreiterung 91 übergehen. Mit Hilfe der beiden Schlitze kann die Metallhülse leicht auf die Seitenwandung 64 des Trägers 63 aufgesetzt werden und diese umgreifen und somit eine leitfähige Verbindung zwischen Metallhülse und Träger herstellen. Das obere Ende der Metallhülse dient zur Aufnahme eines Meßsteckers, wie Bananensteckers, der unter Vorspannung in der Hülse gehaltert wird.

In den Fig. 20 - 23 sind zwei Ausführungsbeispiele eines Schneidmessers 40 dargestellt. Das Schneidmesser gemäß den Fig. 20 und 21 ist den Anschlußkontakten 42 nachgeschaltet, an die zwei Kabeladern angeschlossen werden können. Das Messer weist an dem oberen Ende eine Abschrägung 80 auf, durch die eine Schneidkante 81 gebildet ist. Am unteren Ende ist das Messer mit einer Abkröpfung 82 versehen. Diese Abkröpfung zeigt zum einen die Lage der Schneidkante 81 an, zum anderen dient die Abkröpfung zur Abstützung auf Bereichen des Anschlußkontaktes. Es sei hier noch erwähnt, daß an den Seitenkanten des Messers nicht näher bezeichnete Einbuchtungen zu sehen sind, diese dienen zur Montagehilfe sowie zur Halterung des Messers in den Führungsnuten. Das Messer gemäß Fig. 22 und 23 ist für das Abschneiden von Überlängen bestimmt, deren Adern in den Anschlußkontakten 34 festgelegt werden. Es weist einen ähnlichen Aufbau auf, wie das Ausführungsbeispiel nach den Fig. 20 und 21. Es ist jedoch im Bereich der Schneidekante 81 schmaler als das andere Messer gestaltet, da mit diesem Messer lediglich eine Kabelader durchgeschnitten werden soll.

Bei dem in Fig. 19 gezeigten Anschluß der die beiden Kontakte 34 und 42 einstückig miteinander verbindet, ist als Besonderheit anzusehen, daß die Kontaktschenkel 39 an ihren Außenseiten Einprägungen 84 tragen, durch die eine Verlängerung der Aussenseiten erzielbar ist. Hierdurch werden die Kontaktschenkel gegeneinander bewegt, wodurch der Kontaktführungsschlitz 37, sowie der Schlitz 38, in seiner Breite verkleinert wird, und unter Spannung die angeschlossenen Adern haltern kann. Die Einprägungen erlauben auch den Kontaktführungsschlitz breiter - mit einem stabileren Stanzmesser also - herzustellen, wobei, wie erwähnt, durch die Prägung die gewünschte Schlitzbreite einstellbar ist. Darüberhinaus ist die Schlitzbreite derart auf Untermaß verkleinerbar, daß eine zustätzliche Vorspannung gegenüber einer anzuschließenden Ader erhalten wird.

Wie bereits erwähnt, sind die dargestellten Ausführungsformen nur eine beispielsweise Verwirklichung der Erfindung, diese ist nicht darauf beschränkt, vielmehr sind noch mancherlei Änderungen und andere Gestaltungen möglich. Beispielsweise könnte statt eines Überspannungsabletermagazins auch einzelne Überspannungsableiterstekker in die entsprechenden Aufnahmen mit den Abbiegungen eingesetzt werden. Die Ableitungen würden dann über eine Erdungsschiene erfolgen. Wichtig ist, daß auf jeden Fall die Kontaktreihe 74 sowie gegebenenfalls 73 für die Anschlußkontakte der Rangierleitungen bzw. der Prüf- und Trennstekker frei bleibt. Weiter könnten die Rastnasen zur Rastverbindung des Anschlußblockes mit dem wannenförmigen Träger nur an einer Seite des Vorsprunges liegen. Hierdurch würde bei Einsetzen eines weiteren Anschlußblockes der Bereich der Seitenwandung des Trägers, der bereits einen Anschlußblock trägt, nicht ausgeweitet. Schließlich könnten auch die Rastnasen sowie der Vorsprung zur Führung des Anschlußblockes an einer federnden Zunge des Anschlußblockes angeordnet sein. Beim Einsetzen in die Schlitze würde dann die Feder des Anschlußblockes leicht ausweichen, bis die Rastnasen schließlich in den Quersteg eingreifen können. Weiter sei noch erwähnt, daß die Kabelabschlußeinheit auch bei Signal- und Steuerleitungen eingesetzt werden kann.

**Bezugszeichenliste:**

20 Anschlußblock
21 Oberteil
22 Unterteil
23 niedrige Stufe von 20
24 hohe Stufe von 20
25 Vertiefung
26 Oese
27 Oesen (seitwärts)
28 Schlitz
29 Verlängerung
30 Vorsprung

31 Rastnasen
32 kanalartige Vertiefung von 23
33 kanalartige Vertiefung von 24
34 Anschlußkontakt
35 Nasen
36 Ausnehmung von 34
37 Kontaktführungsschlitz
38 Schlitz
39 Kontaktschenkel
40 Schneidmesser
41 Gehäuseausnehmung
42 Anschlußkontakt
43 Zunge
44 Ausbuchtung von 43
45 Vorsprung
46 muldenartige Vertiefung
47 Zungen
48 Schenkel
49 Abbiegung
50 Überspannungsableiter
51 Kontakt
52 Durchbruch
53 Öffnung für 51
54 Magazin
55 Erdungsschiene
56 federnder Kontakt
57 Erdungsanschlußfeder
58 Schmelzpille
59 Ende von 56
60 Schlitze von 20
61 Kabeleinheit
62 Kabel
63 Träger
64 Seitenwandung
65 Schlitze
66 Querschlitze
67 Schlitze
68 Beschaltungswerkzeug
69 tunnelartige Ausnehmung
70 Abschnitte
71 Kontaktreihen
72 Kontaktreihen
73 Kontaktreihen
74 Kontaktreihen
75 Schenkel
76 Füllmasse
77 Öffnungen in 22
78 Zwischenstege von 27
79 Aufnahmen in 27
80 Abschrägungen an 40
81 Schneidkante an 40
82 Abkröpfung an 40
83 Führungsnuten an 20
84 Anprägungen in 20
85 Einführungsanschrägungen für 34, 42
86 Bohrungen in 20
87 Metallhülse
88 Längsschlitz an 87

89 Schlitz an 87
90 Vorsprung in 88 und 89
91 Verbreiterung

## Ansprüche

Kabelabschlußeinheit für Fernmelde-, Signal-, Steuerkabel od.dgl., mit einem wannenartigen Träger, an dem das Ende eines Kabels sowie die aus dem Kabel heraustretenden Kabeladern anbringbar sind, mit einer Vielzahl quer zur Längsrichtung des Trägers sich erstreckender, auf den Träger aufsetzbarer, parallel zueinander ausgerichteter Anschlußblöcke, die mehrere Reihen von Kontakten aufweisen, von denen zwei Reihen einen abisolierfreien Leiteranschluß aufweisen, hierbei sind die Kontakte der einen Reihe für ankommende Adern und die Kontakte der anderen Reihe für abgehende Leitungen, insbesondere Rangierleitungen vorgesehen, und mit wenigstens einer weiteren Kontaktreihe für die Kontaktierungsmöglichkeit von Überspannungsableitern, Trenn- und Prüfsteckern od.dgl., wobei die Kontaktreihe der ankommenden Kabeladern im Querschnitt durch den Anschlußblock gesehen tiefer angeordnet ist, als die Kontaktreihe der abgehenden Leitungen, wobei in den Anschlußblöcken zwischen den unterschiedlich hoch gestalteten Kontaktreihen die Kontaktreihe für die Überspannungsableiter vorgesehen ist, und die Überspannungsableiter sich in dem Raum oberhalb der niedrigen Reihe für die Anschlußkontakte im Anschlußblock erstrecken,
**dadurch gekennzeichnet,**
daß an den Seitenstirnflächen der Anschlußblöcke (20) Ösen (27) vorgesehen sind, die durch mehrere Zwischenstege (78) in mehrere Aufnahmen (79) unterteilt sind.

FIG.1

FIG.2 FIG.3

FIG.4

FIG.6 FIG.5 FIG.7

QUANTE

FIG. 8

FIG. 9

FIG. 10

QUANTE

FIG. 11    FIG.12    FIG.13    FIG.14

FIG.15    FIG.16

FIG.17

FIG.19

FIG. 18

FIG.20  FIG.21

FIG. 24

FIG.22  FIG.23

FIG.26  FIG.25

QUANTE